# EUROPEAN PATENT APPLICATION

(11) **EP 2 581 695 A1**
(43) Date of publication of application: **17.04.2013**
(21) Application number: 11184891.7
(22) Date of filing: 12.10.2011
(51) Int. Cl.: F25J 3/06, B01D 53/00, C10L 3/10

(54) **System and method for removing gaseous contaminants from a methane-containing contaminated gas stream**

(71) Applicant: Shell Internationale Research Maatschappij B.V., 2596 HR The Hague (NL)
(72) Inventor: Assink, Gerrit Jan Barend, 1031 HW Amsterdam (NL); van Santen, Helmar, 1031 HW Amsterdam (NL)
(74) Representative: Matthezing, Robert Maarten

(57) **Abstract**

The present invention provides a system (1) for removing gaseous contaminants from a methane-containing contaminated gas stream (10), the system (1) at least comprising:
- a separation vessel (2) having: a first inlet (21) for a stream (20) which comprises a methane-containing gas and a slurry of a contaminant; a second inlet (22) for a stream (50) comprising liquid contaminant to dilute the slurry inside the separation vessel (2); a first outlet (23) for a methane-containing gas stream (30); and a second outlet (24) for liquid contaminant (40);
- a slurry collector (3) for directing the diluted slurry inside the separation vessel (2) towards an eductor (4);
- an eductor (4) for receiving the diluted slurry collected by the slurry collector (3);
- a heat exchanger (5), wherein the inlet (51) of the heat exchanger (5) is connected to an outlet (42) of the eductor (4) and wherein the outlet (52) of the heat exchanger (5) is connected to the second inlet (22) of the separation vessel (2);
wherein during use of the system (1), the flow through the slurry collector (3), eductor (4) and into the heat exchanger (5) is substantially vertical.

## Description

The present invention relates to a system and method for removing gaseous contaminants, especially carbon dioxide (CO₂) and/or hydrogen sulphide (H₂S), from a methane-containing contaminated gas stream.

The removal of acid contaminants, especially carbon dioxide and/or hydrogen sulphide, from methane-containing gas streams has been described in a number of publications.

As an example, WO 2010/023238 discloses a method of removing gaseous contaminants, especially CO₂ and H₂S, from a methane-containing gas stream. In Fig. 1 of WO 2010/023238 a cryogenic separation vessel is shown, containing an eductor for horizontally passing a diluted slurry containing solid and liquid contaminant to a heat exchanger.

A potential problem of the method as described in WO 2010/023238 is the removal of the contaminants in a reliable way from the separation vessel. This, as the continuous stream of solid particles in the described method may occasionally result in accumulation of solid material in the trajectory from the top of the eductor to the inlet of the heat exchanger and consequently in restricted flow.

It is an object of the present invention to solve or minimize the above problem.

It is a further object of the present invention to provide an alternative system and method for removing gaseous contaminants such as CO₂ and/or H₂S from a contaminated gas stream.

One or more of the above or other objects are achieved according to the present invention by providing a system for removing gaseous contaminants from a methane-containing contaminated gas stream, the system at least comprising:
- a separation vessel having: a first inlet for a stream which comprises a methane-containing gas and a slurry of a contaminant; a second inlet for a stream comprising liquid contaminant to dilute the slurry inside the separation vessel; a first outlet for a methane-containing gas stream; and a second outlet for liquid contaminant;
- a slurry collector for directing the diluted slurry inside the separation vessel towards an eductor;
- an eductor for receiving the diluted slurry collected by the slurry collector;
- a heat exchanger, wherein the inlet of the heat exchanger is connected to an outlet of the eductor and wherein the outlet of the heat exchanger is connected to the second inlet of the separation vessel;
wherein during use of the system, the flow through the slurry collector, eductor and into the heat exchanger is substantially vertical.

It has now been surprisingly found according to the present invention that by arranging the flow through the slurry collector, eductor and into the heat exchanger substantially vertically, the build-up of solid material on top of the eductor can be avoided or at least minimized. According to the present invention a continuously moving slurry phase is obtained, minimizing the risk of any blockages in the separation vessel or in the pipelines and other pieces of equipment.

The methane-containing gas stream to be used according to the present invention is not limited in any way. Suitably, the methane-containing gas stream is a methane-rich natural gas stream in which the gaseous contaminants are CO₂ and/or H₂S and/or C₂+-hydrocarbons, in particular CO₂. Typically, the methane-containing gas stream is a methane-rich stream, containing between 10 and 90 vol% methane. Although the present invention is not limited to a specific amount of contaminant, the methane-containing gas stream typically contains at least 10 vol% of the contaminant. The contaminant may be selected from one or more of a wide range of contaminants (including C₂₊-hydrocarbons, i.e. having two or more carbon atoms), but is typically selected from H₂S and CO₂ and is in particular CO₂.

Apart from the methane, the methane-containing gas stream may contain other (e.g. C₂₊-)hydrocarbons. The amount of the hydrocarbon fraction in the contaminated gas stream is suitably from 10 to 85 vol% of the gas stream, preferably from 25 to 80 vol%. The hydrocarbon fraction of the natural gas stream comprises especially at least 75 vol% of methane, preferably 90 vol%. The hydrocarbon fraction in the natural gas stream may suitably contain from between 0 and 25 vol% of C₂₊-hydrocarbons, preferably between 0 and 20 vol% of C₂-C₆ hydrocarbons, more preferably between 0.3 and 18 vol% of C₂-C₄ hydrocarbons, especially between 0.5 and 15 vol% of ethane. The gas stream may also comprise up to 20 vol%, suitably from 0.1 to 10 vol% of nitrogen, based on the total gas stream.

The amount of carbon dioxide in the gas stream is suitably between 10 and 90 vol%, preferably between 20 and 75 vol%, and/or the amount of hydrogen sulphide, if present, in the gas stream is suitably up to 40 vol%, based on the total contaminated gas stream. It is observed that the present process is especially suitable for gas streams comprising large amounts of CO₂, e.g. 10 vol% or more, suitably from 15 to 90 vol% CO₂.

The separation vessel to be used according to the present invention is not limited in any way and can have many shapes. Preferably, the separation vessel is kept as simple as possible and avoids the use of internals where possible. Preferably no distillation trays and the like are present.

The slurry collector to be used according to the present invention is not limited in any way either. Optionally, use is made of a (preferably cone-shaped) funnel. One or more funnels can be arranged on top of each other. Preferably in the wider part of the funnel, a grid is present to stop large chunks of falling in the more narrow inlet of the eductor/pump and in doing so, avoid plugging of the pump/eductor.

According to the present invention, use is made of an eductor for removing the diluted slurry of contaminants from the separation vessel and passing/introducing said slurry into the heat exchanger. The diluted slurry of contaminants functions as the suction fluid in the eductor, whereas for example a recirculation stream that may be introduced in the eductor may function as the motive fluid.

The eductor to be used according to the present invention is not limited in any way. Eductors, also referred to as siphons, exhausters, ejectors or jet pumps, are as such well-known and have extensively been described in the prior art. Reference herein to an eductor is to a device to pump produced solid and liquid contaminant (in particular CO₂) slurry from the separation vessel to the heat exchanger. The eductor is suitably designed for use in operations in which the head pumped against is low and is less than the head of the fluid used for pumping. For a description of suitable eductors, also referred to as eductors or jet pumps, reference is made to Perry's Handbook for Chemical Engineering, 8th edition, chapter 10.2. According to the present invention any type of eductor can be used. The eductor is preferably a liquid jet solid pump.

Suitably, a housing can be positioned around the eductor, enabling the eductor to be placed outside the separation vessel. Such a housing can, for instance, be a vessel-like containment, e.g. a pipe, that can be isolated from the process through valves.

Preferably, the eductor is arranged inside the separation vessel or partly inside and outside the separation vessel. In another preferred embodiment of the present invention the eductor is arranged outside the separation vessel. Such an embodiment can be useful in situations in which the eductor in use needs to be inspected, repaired or replaced on a regular basis.

The eductor can be of such a size that it fits completely in the separation vessel. However, it may also extend at two locations through the internal wall of the separation vessel.

The eductor is arranged at a level which is higher than the level at which the heat exchanger is arranged, allowing the diluted slurry of contaminants to flow downwards into the heat exchanger. It will be understood that the eductor is arranged below the liquid/slurry level which is maintained in the separation vessel during use.

It is particularly preferred that a part of the liquid contaminant removed from the second outlet of the separation vessel can be used as a motive fluid in the eductor.

The heat exchanger may be located inside or outside the vessel; however, typically and preferably, the heat exchanger is arranged outside the separation vessel.

The outlet of the heat exchanger is connected to the second inlet (and optionally to one or more further inlets) of the separation vessel. This second inlet may be at various levels of the separation vessel and is not limited to a certain specific position. Preferably, the second inlet is located below the slurry collector, typically near the bottom of the separation vessel. Preferably, the outlet of the heat exchanger is also connected to a third inlet of the separation vessel, which third inlet is preferably located above the slurry collector, typically near the liquid/slurry level maintained in the separation vessel during use.

Further it is preferred that the system contains a cooler, preferably an expander such as a JT-valve, upstream of the first inlet of the separation vessel, for cooling the contaminated gas stream to obtain the stream comprising the slurry. In the context of the present invention, the cooler may be an enthalpic or isenthalpic cooling device, as long as a slurry is obtained.

In a further aspect the present invention provides a method for removing gaseous contaminants from a methane-containing contaminated gas stream, the method comprising at least the steps of:
a) providing the contaminated gas stream;
b) cooling the contaminated gas stream to a temperature at which part of the contaminants solidify to obtain a stream which comprises a methane-containing gas and a slurry of a contaminant;
c) introducing the stream obtained in step b) into a separation vessel;
d) removing a methane-containing gas stream from the separation vessel;
e) introducing liquid contaminant into the separation vessel to obtain a diluted slurry of contaminant;
f) directing the diluted slurry inside the separation vessel towards an eductor using a slurry collector;
g) passing at least a part (and preferably substantially all) of the diluted slurry via the eductor into and through a heat exchanger in which solid contaminant present in the diluted slurry is melted thereby obtaining a liquid contaminant;
h) recycling the liquid contaminant obtained in step g) into the separation vessel to obtain the diluted slurry of contaminants as described above in step e); i) removing liquid contaminant from the separation vessel;
wherein the flow through the slurry collector, the eductor and into the heat exchanger is substantially vertical.

In the method according to the present invention the contaminated gas stream provided in step a) has suitably a temperature between -5 and 150°C, preferably between - 10 and 70°C, and a pressure between 10 and 700 bara, preferably between 20 and 200 bara. The contaminated gas stream provided in step a) of the present method can suitably have been subjected to one or more purification steps in which gaseous contaminants are removed, before the cooling of step b) is carried out. Also, if desired cooling, heating compressing, de-compressing may take place.

Because of the cooling in step b) a part of the contaminants (in particular CO₂) solidify thereby obtaining a stream comprising a methane-containing gas and a slurry of a contaminant; i.e. part of the contaminant (or contaminants if there are more contaminants present) is in the liquid phase and part is in the solid phase. The cooling in step b) of the present method can be achieved in many ways and is suitably done by for example isenthalpic expansion, preferably isenthalpic expansion over an orifice or a valve, especially a Joule-Thomson valve. Also the cooling can be done by nearly isentropic expansion, especially by means of an expander, preferably a turbo expander or a laval nozzle. A valve is in particular preferred. In step b) the contaminated gas stream is suitably cooled to a temperature between -40 and -100°C, preferably between -50 and -90°C.

Suitably, the contaminated gas stream is pre-cooled to a temperature between 15 and -75°C, preferably between 5 and -70°C, before expansion. Suitably, such a precooling of the contaminated gas stream is done by heat exchange against a cold fluid, especially an external refrigerant, e.g. a propane cycle, an ethane/propane cascade or a mixed refrigerant cycle, or an internal process loop, suitably a carbon dioxide of hydrogen sulphide stream, or a cold methane stream.

The cooling as described in step b) of the present method (to obtain the slurry) is preferably carried out at a close distance, e.g. up to a few meters, preferably at most 1 m, to the separation vessel. The separation vessel is suitably a vessel which comprises a vertical cylindrical housing. The diameter may vary from 1 to 10 meter, or even more, the height may vary from 3 to 35 meters or even more. In general, the liquid/slurry level maintained in the separation vessel will vary between 30 and 70% of the height of the vessel. The temperature of the diluted slurry is suitably about 1 to 45°C higher than the temperature of the contaminated gas stream on introduction in the separation vessel, preferably 3 to 40°C.

The introduction of the stream (comprising a methane-containing stream and a slurry of contaminants) obtained in step c) will be at a level which is preferably higher than the level at which the stream of liquid contaminant obtained from the heat exchanger is introduced into the separation vessel in steps e) and h). Preferably, the level at which the stream containing the slurry of contaminant is introduced into the separation vessel in step c) will be higher than the level at which the heat exchanger will be arranged. In a preferred embodiment of the present invention solid contaminant will mainly comprise carbon dioxide, whereas liquid contaminant will usually comprise both carbon dioxide and hydrogen sulphide. A small amount of hydrocarbons may be present in the slurry.

In general, the methane-containing gas stream as removed in step d) is removed from the separation vessel at a relatively high level, preferably at the top. The outlet for the methane-containing gas stream will usually be above the level at which the stream of liquid contaminant obtained from the heat exchanger is introduced into the separation vessel in step e).

The content of contaminants in the methane-containing gas stream as removed from the separation vessel in step d) is suitably less than 10 vol%, preferably less than 5 vol%. In order to reach gas line specifications or LNG specifications for the methane-containing gas stream removed in step d), the methane-containing gas stream may be further purified, e.g. in a cryogenic distillation process using a cryogenic distillation section which is as such known in the art (see e.g. WO 2010/023238, the teaching of which is hereby incorporated by specific reference).

Preferably, the present method is carried out in such a way that substantially all the solid contaminant present in the diluted slurry of contaminants (as obtained in step e)) is melted into liquid contaminant in step g). With the phrase "substantially" is meant that at least 95% of the solid contaminant present in the diluted slurry is melted, especially at least 98%. More preferably, all the solid contaminant present in the diluted slurry of contaminants is melted in step g). The heat exchanger as used in step g) preferably uses a process stream to supply the heat for melting the solid contaminants (by indirect heat exchange); a suitable process stream is the methane-containing gas stream removed in step d).

Suitably, between 1 and 90 vol% of the liquid contaminant obtained in step g) is introduced in the separation vessel as described in step e), preferably between 5 and 80 vol% of the liquid contaminant obtained in step g). It is also possible to introduce all liquid contaminant obtained in step g) in the separation vessel as described in step e). If desired, part of the liquid contaminant is introduced into the intermediate part of the separation vessel and part is introduced into the bottom part.

According to a preferred embodiment of the present invention, a part of the liquid contaminant removed in step i) is used as a motive fluid in the eductor in step g). Suitably, between 25 and 95 vol% of the stream of liquid contaminant removed from the separation vessel in step i) is used as a motive fluid in the eductor, preferably between 30 and 85 vol%.

If desired, the liquid contaminant as obtained in step g) may be fed into a gas/liquid separator before the recycling of step h). Such a gas/liquid separator may preferably the bottom part of the separation vessel at a level which is higher than the level at which the liquid contaminant is removed from the bottom part of the separation vessel in step i). The liquid contaminant may comprise some vapour and/or flash gas, e.g. up till 10 vol%, especially up till 5 vol%, more especially up till 2 vol%, of the total liquid contaminant. This vapour and/or flash gas may be removed by means of a flash gas separator, preferably a flash gas separator located outside of the gas/liquid separator. As a result of introducing the liquid contaminant at a level which is higher that the level at which the liquid contaminant is removed, free flash gas and/or vapor can escape to the top part of the separation vessel.

In step h) the recycle of the liquid contaminant can be introduced into the separation vessel and into the slurry of contaminants at a level lower than that at which the methane-containing gas stream is removed from the separation vessel. In this way a washing stream can be created over the inside walls of the vessel. The stream introduced in step e) has the main function to dilute the slurry and depending on the process conditions to strip some hydrocarbons and/or pre-melt some of the solids in the slurry of contaminants which has been introduced into the separation vessel in step c).

The stream of liquid contaminant stream that is removed from the bottom part of the separation vessel in step i) is suitably removed at a level below the slurry level inside the separation vessel. Suitable internals may be used to prevent ingress of solid particles into the withdrawal line for liquid contaminant. Preferably a pump is installed in the withdrawal line to remove the stream of liquid contaminant from the bottom part of the separation vessel, and to power the stream of liquid contaminant that is to be used as the motive fluid in the eductor.

In the event that the stream of liquid contaminant removed in step i) mainly comprises carbon dioxide and is therefore a CO₂-rich stream, the CO₂-rich stream is preferably further pressurised and injected into a subterranean formation, preferably for use in enhanced oil recovery or for storage into an aquifer reservoir or for storage into an empty oil reservoir. It is an advantage that a liquid CO₂-rich stream is obtained, as this liquid stream requires less compression equipment to be injected into a subterranean formation. Preferably, at least 90%, more preferably at least 95% and most preferably at least 98% of the solid acidic contaminants are melted. In this way a liquid stream of contaminants is obtained, which can be easily transported further.

Preferably, in step h) at least a part of the liquid contaminant is fed into the separation vessel at an inlet above the slurry collector. Also, it is preferred that in step h) at least a part of the liquid contaminant is fed into the separation vessel at an inlet below the slurry collector. It is in particular preferred that in step h) more liquid contaminant is fed into the separation vessel at the inlet below the slurry collector than at the inlet above the slurry collector. Suitably, between 50 and 99 vol%, preferably between 60 and 95 vol% of the total amount of liquid contaminant that is introduced into the separation vessel is introduced at the inlet below the slurry collector of the separation vessel. Suitably the remaining part of the liquid contaminant is introduced into the separation vessel above the slurry collector.

Hereinafter the invention will be further illustrated by the following non-limiting drawing. Herein shows:
Fig. 1 schematically a first embodiment of the system according to the present invention, wherein the eductor is inside the separation vessel; and
Fig. 2 schematically a second embodiment of the system according to the present invention, wherein the eductor is outside the separation vessel.

For the purpose of this description, same reference numbers refer to same or similar components.

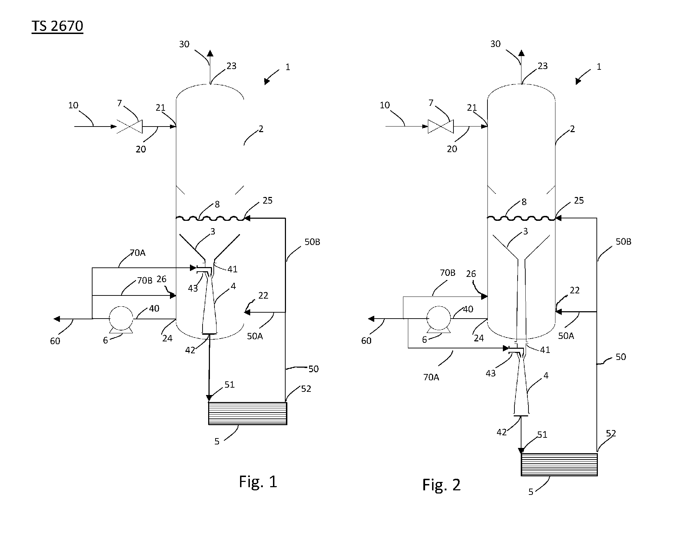

Fig. 1 schematically shows a first embodiment of a system 1 according to the present invention for removing gaseous contaminants from a methane-containing contaminated gas stream 10.

The system 1 comprises a separation vessel 2, a slurry collector 3, an eductor 4, a heat exchanger 5, a pump 6 and a cooler 7 (preferably an expander such as a JT-valve). Reference number 8 indicates the liquid/slurry level as maintained in the separation vessel 2 during use; typically, the liquid/slurry level 8 is maintained above the slurry collector 3.

The separation vessel 2 has a first inlet 21 for a stream 20 which comprises a methane-rich gas and a slurry of a solid and liquid contaminant, typically at the top or intermediate part of the separation vessel 2. Further, the separation vessel 2 has a second inlet 22 for a stream 50 comprising liquid contaminant to dilute the slurry inside the separation vessel 2. The second inlet 22 may be at various levels of the separation vessel 2, e.g. above, at or below the liquid/slurry level 8 (and several inlets may be present for feeding the stream 50 into the separation vessel 2). In the embodiment of Fig. 1, the second inlet 22 is located below the slurry collector 3, near the bottom of the separation vessel 2; also a further (third) inlet 25 is present above the slurry collector 3, near the liquid/slurry level 8. Further, the separation vessel 2 has a first outlet 23 for a methane-containing gas stream 30, typically at the top part of the separation vessel 2. Further, the separation vessel 2 has a second outlet 24 for liquid contaminant 40, typically at the bottom of the separation vessel 2. Also, in the embodiment of Fig. 1, the separation vessel 2 has a fourth inlet 26 for receiving a part 70B of the liquid contaminant removed 40 from the second outlet 24; a part 70A of the liquid contaminant 40 removed from the second outlet 24 is used as a motive fluid in the eductor 4. Of course, further inlets and outlets may be present, if desired.

The slurry collector 3, preferably in the form of one or more (preferably cone-shaped) funnels, is used for collecting and directing the diluted slurry inside the separation vessel 2 towards the eductor 4. The slurry collector 3 is typically arranged below the first inlet 21 of the separation vessel 2, preferably below the liquid/slurry level 8 and (if present) preferably below the third inlet 25.

The eductor 4, which is typically arranged below the slurry collector 3, receives at its inlet 41 the diluted slurry collected by the slurry collector 3. In the embodiment of Fig. 1, the eductor 4 is arranged inside the separation vessel 2. However, the eductor may also be arranged outside (see Fig. 2) or partly inside and outside the separation vessel.

In the embodiment of Fig. 1, the heat exchanger 5 is arranged outside the separation vessel 2. The inlet 51 of the heat exchanger 5 is connected to an outlet 42 of the eductor 4 and the outlet 52 of the heat exchanger 5 is connected to the second inlet 22 and third inlet 25 of the separation vessel 2.

Of particular note is that the flow through the slurry collector 3, eductor 4 and into (but not necessarily through) the heat exchanger 5 is substantially vertical. In other words, the slurry collector 3 is positioned above the eductor 4, and the eductor 4 above the heat exchanger 5.

The cooler 7, preferably a JT-valve, is located upstream of the first inlet 21 of the separation vessel 2 and is intended for cooling the contaminated gas stream 10 to obtain the stream 20 containing the slurry.

During use of the system 1 according to the present invention, a methane-containing contaminated gas stream 10 is provided and cooled in cooler 7 to a temperature at which part of the contaminants solidify to obtain the stream 20 which comprises a methane-containing gas and a slurry of solid and liquid contaminant. The stream 20 is introduced into the separation vessel 2 at the first inlet 21.

A methane-containing gas stream 30 is removed from the separation vessel 2 at first outlet 23 and may be subjected to further processing and/or liquefaction. A liquid contaminant stream 40 is removed from the separation vessel 2 at second outlet 24 and may be used for e.g. storage, EOR and the like.

As shown in the embodiment of Fig. 1, a part 50A of the liquid contaminant stream 50 coming from the outlet 52 of the heat exchanger 5 is fed to the bottom part of the separation vessel 2 at second inlet 22, below the slurry collector 3 to obtain a diluted slurry of contaminants. At third inlet 25 (in the embodiment of Fig. 1 near the liquid/slurry level 8 in the separation vessel) liquid contaminant 50 may be introduced (as stream 50B) into the separation vessel 2.

The diluted slurry is directed inside the separation vessel 2 towards the top opening 41 of the eductor 4 using the slurry collector 3. Part, but preferably substantially all, of the diluted slurry is passed via the eductor 4 into and through the heat exchanger 5. In the heat exchanger 5 solid contaminant present in the diluted slurry is melted thereby obtaining a liquid contaminant stream 50. The liquid contaminant stream 50 obtained at the outlet 52 of the heat exchanger is recycled to the second inlet 22 and/or the third inlet 25 of the separation vessel 2 to obtain the diluted slurry of contaminants as described above.

The flow through the slurry collector 3, the eductor 4 and into the heat exchanger 5 is substantially vertical.

Part 70A of the liquid contaminant stream 40 removed at the second outlet 24 of the separation vessel 2 is sent to an inlet 43 of the eductor 4 and used as the motive fluid in the eductor 4 (the diluted slurry being the motive fluid) and via the eductor 4 it is passed into the heat exchanger 5; the remainder of the stream 40 is removed as stream 60 and further processed, if desired. Part 70B of the liquid contaminant 40 removed at the second outlet 24 of the separation vessel 2 may be recycled to the separation vessel 2 by feeding it into the separation vessel at fourth inlet 26.

Figure 2 schematically shows a second embodiment of the system 1 according to the present invention, wherein the eductor 4 is arranged outside the separation vessel 2.

The person skilled in the art will readily understand that many modifications may be made without departing from the scope of the invention.

## Claims

1. A system (1) for removing gaseous contaminants from a methane-containing contaminated gas stream (10), the system (1) at least comprising:
- a separation vessel (2) having: a first inlet (21) for a stream (20) which comprises a methane-containing gas and a slurry of a contaminant; a second inlet for a stream (50) comprising liquid contaminant to dilute the slurry inside the separation vessel (2); a first outlet (23) for a methane-containing gas stream (30); and a second outlet (24) for liquid contaminant (40);
- a slurry collector (3) for directing the diluted slurry inside the separation vessel (2) towards an eductor (4);
- an eductor (4) for receiving the diluted slurry collected by the slurry collector (3);
- a heat exchanger (5), wherein the inlet (51) of the heat exchanger (5) is connected to an outlet (42) of the eductor (4) and wherein the outlet (52) of the heat exchanger (5) is connected to the second inlet of the separation vessel (2);
wherein during use of the system (1), the flow through the slurry collector (3), eductor (4) and into the heat exchanger (5) is substantially vertical.

2. System (1) according to claim 1, wherein a part (70A) of the liquid contaminant (40) removed from the second outlet (24) of the separation vessel (2) can be used as a motive fluid in the eductor (4).

3. System (1) according to claim 1 or 2, wherein the heat exchanger (5) is arranged outside the separation vessel (2).

4. System (1) according to any of claims 1-3, wherein the second inlet (22) is located below the slurry collector (3).

5. System (1) according to any of claims 1-4, wherein the outlet (52) of the heat exchanger (5) is connected to a third inlet (25) of the separation vessel (2), which third inlet (25) is preferably located above the slurry collector (3).

6. System (1) according to any of claims 1-5, further containing a cooler (7), preferably an expander, upstream of the first inlet (21) of the separation vessel (2), for cooling the contaminated gas stream (10) to obtain the stream (20) comprising the slurry.

7. A method for removing gaseous contaminants from a methane-containing contaminated gas stream (10), the method comprising at least the steps of:
a) providing the contaminated gas stream (10);
b) cooling the contaminated gas stream (10) to a temperature at which part of the contaminants solidify to obtain a stream (20) which comprises a methane-containing gas and a slurry of a contaminant;
c) introducing the stream (20) obtained in step b) into a separation vessel (2);
d) removing a methane-containing gas stream (30) from the separation vessel (2);
e) introducing liquid contaminant (50) into the separation vessel (2) to obtain a diluted slurry of contaminant;
f) directing the diluted slurry inside the separation vessel (2) towards an eductor (4) using a slurry collector (3);
g) passing at least a part of the diluted slurry via the eductor (4) into and through a heat exchanger (5) in which solid contaminant present in the diluted slurry is melted thereby obtaining a liquid contaminant (5);
h) recycling the liquid contaminant (50) obtained in step
g) into the separation vessel (2) to obtain the diluted slurry of contaminants as described above in step e);
i) removing liquid contaminant (40) from the separation vessel (2);
wherein the flow through the slurry collector (3), the eductor (4) and into the heat exchanger (5) is substantially vertical.

8. The method according to claim 7, wherein a part (70A) of the liquid contaminant (40) removed in step i) is used as a motive fluid in the eductor (4).

9. The method according to claim 7 or 8, wherein in step h) at least a part (50B) of the liquid contaminant (50) is fed into the separation vessel (2) at an inlet (25) above the slurry collector (3).

10. The method according to any of claims 7-9, wherein in step h) at least a part (50A) of the liquid contaminant (50) is fed into the separation vessel (2) at an inlet (22) below the slurry collector (3).

11. The method according to any of claims 9 and 10, wherein in step h) more liquid contaminant (50) is fed into the separation vessel (2) at the inlet (22) below the slurry collector (3) than at the inlet (25) above the slurry collector (3).
